**Europäisches Patentamt**

**European Patent Office**

**Office européen des brevets**

(19)

(11) Publication number: **0 102 776**
**A1**

# EUROPEAN PATENT APPLICATION

(12)

(21) Application number: **83304613.9**

(22) Date of filing: **10.08.83**

(51) Int. Cl.³: **B 62 D 25/18**

(30) Priority: **25.08.82 GB 8224391**

(43) Date of publication of application:
**14.03.84 Bulletin 84/11**

(84) Designated Contracting States: –
**DE FR GB SE**

(71) Applicant: **B.S.G. International plc**
**Burgess House 1270 Coventry Road**
**Yardley Birmingham, B25 8BB(GB)**

(72) Inventor: **Cunningham, Douglas James**
**"Sambourne" 4 Church Close Dunton Bassett**
**Lutterworth Leicestershire LE16 5JY(GB)**

(74) Representative: **Hollinghurst, Antony**
**Britax Central Services 40 Granby Avenue**
**Garretts Green Birmingham, B33 OSJ(GB)**

(54) Spray deflectors for vehicles.

(57) Apparatus for reducing the production of water spray by a wheel (14) of a motor vehicle comprises a deflector plate (40) located in front of the wheel and extending horizontally in a transverse direction over a width greater than that of the tyre carried by the wheel (14) while sloping in the longitudinal direction from a forward end above the top of the wheel (14), downwardly and rearwardly to a location in proximity to the front edge of the wheel (14). The deflector plate (40) serves to separate the flow of air towards the front edge of the wheel (14) from drops of water lifted upwardly by the rear edge of the wheel (14).

FIG 2

EP 0 102 776 A1

Croydon Printing Company Ltd.

- 1 -

"Spray Deflectors for Vehicles"

This invention relates to deflectors for reducing the water spray produced by the wheels of motor vehicles when running on wet road surfaces.

According to the invention, apparatus for reducing the production of water spray by a wheel of a motor vehicle comprises deflector means adapted to separate the flow of air towards the front edge of the wheel from drops of water lifted upwardly by the rear edge of the wheel.

The deflector means may comprise a deflector plate located in front of the wheel and extending horizontally in a transverse direction over a width greater than that of the tyre carried by the wheel while sloping in the longitudinal direction from a forward end above the top of the wheel, downwardly and rearwardly to a location in proximity to the front edge of the wheel. The position of the part of the deflector plate level with the axle of the wheel is preferably behind the upper end of the deflector plate.

Preferably the upper end of the deflector plate abuts the underside of the vehicle body so as to inhibit flow of air therebetween.

The bottom end of the deflector plate may be curved to extend forwardly so as to form an air dam.

The apparatus preferably also includes a side plate extending downwardly from the underside of the vehicle to the outer side edge of the deflector plate. The side plate may extend below the deflector plate for at least part of its length.  A second side plate may be provided for the inner side edge of the deflector plate.

When the invention is used with a vehicle having more than one wheel on each end of an axle, a single deflector plate may be provided for each end of such axle.

An embodiment of the invention will now be described, by way of example, with reference to the accompanying drawing, in which:

Figure 1 is a side view of an articulated commercial vehicle showing a typical distribution of water spray, and

Figure 2 is a side view of the vehicle shown in Figure 1, fitted with apparatus in accordance with the invention.

In both figures of the drawing, the flow paths of water drops are represented by arrows drawn with solid lines while the flow paths of air are represented by arrows drawn with dotted lines.

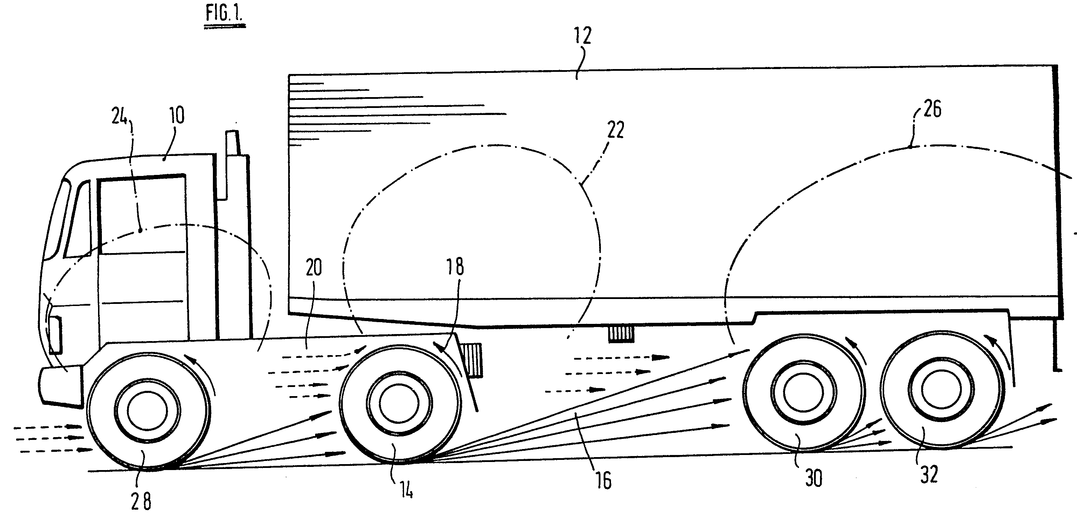

Referring first to Figure 1, an articulated commercial vehicle comprises a tractor 10 and a trailer 12.  Considering the rear wheel 14 of the tractor 10, drops of water are ejected from the rear of the bottom of the wheel and, while most of such drops are ejected backwardly, as illustrated by the arrows 16, some is entrained by the tread of the tyre of the wheel 14 and carried upwardly, as represented by the arrow 18.  These latter droplets meet rearwardly flowing air travelling over the top of the wheel as illustrated by the arrow 20.  When this air flow meets the upwardly travelling drops, the latter are split into much smaller droplets forming a fine mist-like cloud approximately bounded by the chain-dotted line 22.  Similar clouds, bounded by the chain-dotted lines 24 and 26 respectively, are formed by the front wheel 28 of the tractor and the rear wheels 30 and 32 of the trailer.

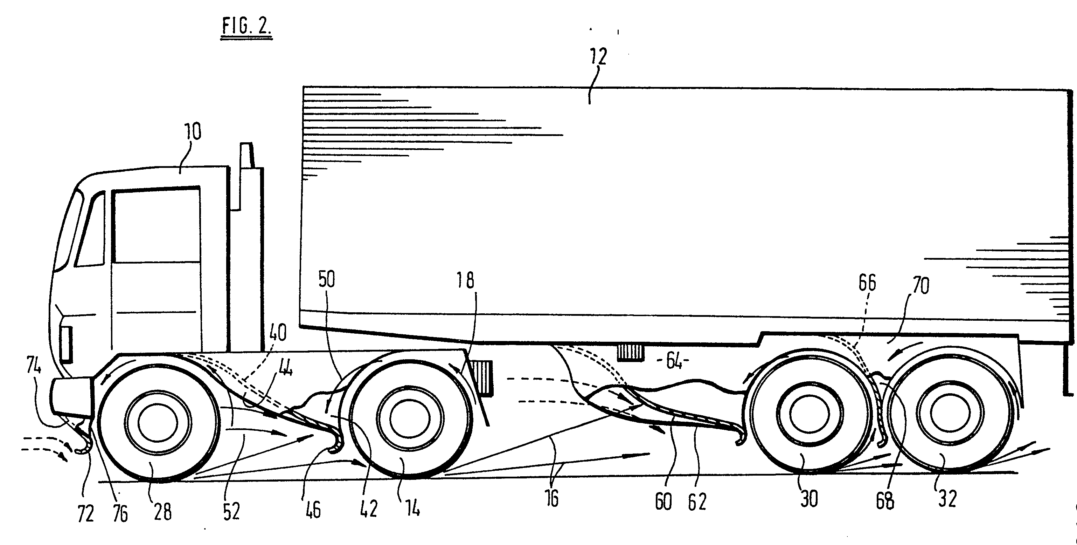

Turning to Figure 2, in accordance with the invention, a deflector plate 40 is mounted in front of the rear wheel 14, between an inner side plate 42 and an outer side plate 44.  The outer side plate 44 is shown partially broken away at the bottom and it will be seen that the bottom edge of the deflector plate 40 curves forwardly so as to form an air dam 46.

When the vehicle is travelling on a wet road, droplets of water entrained by the treat of the tyre on the wheel 14 are carried over the wheel, as illustrated by the arrows 18 and 50, so as to fall on the upper surface of the deflector plate 40 between the two side plates 42 and 44. The droplets of water coalesce with one another on the deflector plate 40 and run off the rear edge thereof as a continuous stream. The flow of air is deflected downwardly by the underside of the deflector plate 40, as indicated by the arrow 52. Consequently the airflow meets the water entrained by the tyre of the wheel 14 as it runs off the bottom edge of the deflector plate 40 in the form of a reasonably continuous stream. The tendency to form a mist of fine droplets is therefore substantially reduced and any such mist is produced closer to the ground than hitherto.

Similarly, a deflector plate 60, between an inner side plate 62 and an outer side plate 64, is located in front of the forward wheel 30 of the trailer and a deflector plate 66 is mounted between side plates 68 and 70 between the wheels 30 and 32 of the trailer. The outer side plates 64 and 70 on the trailer are illustrated as comprising a single sheet of material. However, to facilitate installation on a vehicle, it may be found convenient to form these two side plates, and the corresponding inner side plates, separately from one another with a join in proximity to the upper front edge of the deflector plate 66.

In front of the front wheel 28 of the tractor, a deflector plate 72 in the form of an air dam extends across the full width of the vehicle with inner and outer side plates 74 and 76 aligned with the side plates 40 and 44.

It will be appreciated that the wheels on the other side of the vehicle are provided with deflector plates and side plates similar to those illustrated in Figure 2.

## CLAIMS

1.      Apparatus for reducing the production of water spray by a wheel (14, 28, 30, 32) of a motor vehicle, characterised by deflector means (40. 60, 66, 72) adapted to separate the flow of air towards the front edge of the wheel (14, 28, 30, 32) from drops of water lifted upwardly by the rear edge of the wheel (14, 28, 30, 32).

2.      Apparatus according to claim 1, characterised in that the deflector means comprises a deflector plate (40, 60, 66, 72) located in front of the wheel (14, 28, 30, 32) and extending horizontally in a transverse direction over a width greater than that of the tyre carried by the wheel while sloping in the longitudinal direction from a forward end above the top of the wheel, downwardly and rearwardly to a location in proximity to the front edge of the wheel.

3.      Apparatus according to claim 2, characterised in that the position of the part of the deflector plate (40, 60, 66, 72) level with the axle of the wheel (14, 28, 30, 32) is behind the upper end of the deflector plate.

4.      Apparatus according to claim 1, 2 or 3, characterised in that the upper end of the deflector plate (40, 60, 66, 72) abuts the underside of the vehicle body so as to inhibit flow of air therebetween.

5.      Apparatus according to any preceding claim, characterised in that the bottom end (46) of the deflector plate (40) is curved to extend forwardly so as to form an air dam.

6.      Apparatus according to any preceding claim, characterised by a side plate (44, 64, 70, 74) extending downwardly from the underside of the vehicle to the outer side edge of the deflector plate (40, 60, 66, 72).

7.      Apparatus according to claim 6, characterised in that the side plate (44, 64, 70, 74) extends below the deflector plate (40, 60, 66, 72) for at least part of its length.

8.      Apparatus according to claim 6 or 7, characterised in that a second side plate (42, 62, 70, 76) is provided for the inner side edge of the deflector plate (40, 60, 66, 72).

0102776

FIG.1.

1/2

FIG. 2.

0102776

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 869 617 (GAUSSOIN et al.)<br>* Column 1, lines 54-58; column 2, lines 51-53; figures 1,2 * | 1-4 | B 26 D 25/18 |
| X | US-A-4 258 929 (BRANDON et al.)<br>* Column 2, lines 53-60; figure 1 * | 1,2 | |
| A | DE-A-2 513 631 (VOLKSWAGENWERK)<br>* Claims 1,4; figure * | 1-6 | |
| A | FR-A- 976 070 (ANDREAU)<br>* Figure 1 * | 1,2 | |
| A | GB-A-1 526 212 (NEVILLE INDUSTRIES)<br>* Claim 3; figures 1,2 * | 1,6,8 | TECHNICAL FIELDS SEARCHED (Int. Cl. ³)<br><br>B 62 D 25/16<br>B 62 D 25/18 |

The present search report has been drawn up for all claims

| Place of search | Date of completion of the search | Examiner |
|---|---|---|
| THE HAGUE | 28-11-1983 | OSBORNE J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82